Europäisches Patentamt

European Patent Office

Office européen des brevets

(11) Publication number: **0 224 600 B1**

(12) **EUROPEAN PATENT SPECIFICATION**

(45) Date of publication of patent specification: **18.09.91**  (51) Int. Cl.⁵: **B41J 5/10, H01H 13/70**

(21) Application number: **85114508.6**

(22) Date of filing: **15.11.85**

(54) **One hand key shell.**

(30) Priority: **23.08.85 US 769012**

(43) Date of publication of application:
**10.06.87 Bulletin 87/24**

(45) Publication of the grant of the patent:
**18.09.91 Bulletin 91/38**

(84) Designated Contracting States:
**AT DE FR GB IT NL**

(56) References cited:
**WO-A-81/02272**
**DE-A- 2 638 271**
**US-A- 4 244 659**
**US-A- 4 442 506**

(73) Proprietor: **Dolenc, Heinz**
**R.R.3, Box 40, Mack Road**
**Lebanon, Connecticut 06249(US)**

(72) Inventor: **Dolenc, Heinz**
**R.R.3, Box 40, Mack Road**
**Lebanon, Connecticut 06249(US)**

(74) Representative: **Kraus, Walter, Dr. et al**
**Patentanwälte Kraus, Weisert & Partner**
**Thomas-Wimmer-Ring 15**
**W-8000 München 22(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to an input device operated by a single hand and used to transmit information between the operator of said device and an electronic apparatus in communication with said device, comprising:

a housing;

first keys operable by the thumb of the hand and comprising a plurality of input means mounted to said housing;

a second key array having a plurality of input means mounted to said housing, said second array is disposed on an array axis and operable by a first finger of the hand when the thumb of the hand is operably positioned proximal to said first keys; and

a third key array having a plurality of input means mounted to said housing, said third array is disposed on an array axis and operable by a second finger of the hand when the thumb and the first finger of the hand are operably positioned proximal to said first keys and said second array, respectively.

Previous data input or typewriter terminals have consisted of either a standard typewriter keyboard format, where each key enters a specific character, or a system which involves manipulation of a set of keys through complex data entry schemes which require the operator to memorize pushbutton positions for all letters of the alphabet, punctuation, numbers, and input control functions, such as entering data and shifting from lower case to upper case and any other specialized symbols. The prior art data entry schemes of the latter system are based upon activating one or more keys in a specific pattern to produce a given character, with most characters requiring the use of several keys simultaneously. One invention which utilizes the data entry scheme system requires the user to manipulate five four-position transducer units, one unit assigned to each of the fingers of the user's hand. The switches in the units move linearly from one position to another, wherein different characters are entered by varying the positions of each of the switches in the transducer units (US-A-3 022 878). Other devices utilize simple finger-activated unidirectional pushbuttons rather than complex multiposition transducer switches. The pushbuttons are arranged in various configurations, such as key arrangements which include mounting the buttons to a cylindrical handgrip, displaying them in a rectangular array, and positioning an array of five keys on a planar surface with one key designated for each finger. The five-key planar array terminal utilizes a character pushbutton combination system whereby the input keys for most letters of the alphabet correspond to positions on a five-point inverted parabola that roughly conform to the outline of the letter or its interception points when placed on the grid. For example, a "b" has contact points at the apex coordinate and the two-point positions on the right side of the parabola, because the open loop of the letter is located on the right side of the shaft. A "d", on the other hand, would contact the apex and the two points on the left side of the grid (US-A-3 980 823, US-A-4 442 506 and US-A-4 443 789).

One variation of the previously mentioned data entry scheme locates flex sensors, touch sensors, and tilt sensors on various locations of a glove which fits over the hand. The sensors were activated either individually or in series by flexing certain joints or touching certain areas of the hand, resulting in a given command. The glove was used to input characters using "sign language". However, the glove was problematic, as the sensors were difficult to adjust to eliminate inadvertent activation by flexing, tilting, or touching. Moreover, the uncertainty as to the degree of tilt or flex necessary to input characters presented another drawback to the user of the glove device since the flex and tilt sensors were to be operated by hand movements not normally performed by the user in everyday life (US-A-4 414 537).

A second embodiment similar to the glove device locates touch sensors on the inner surface of a mold made to conform to the shape of a human hand. A total of eight touch sensors are distributed such that the thumb and heel of the hand contact two switches each, while the remaining fingers each have one switch. As discussed in regard to the other embodiments, the data entry scheme system requires the user to press multiple buttons in combinations.

In summary, the above prior art includes character input terminals operated by one hand which force the operator to remember complex pushbotton schemes, most conceived without any logical scheme as to which keys are used for certain characters. Therefore, today the user of such a terminal is faced with the dilemma of either memorizing the data entry schemes or using a simpler system with fewer possible input commands and thus a less powerful system.

Furthermore, an input device of the type mentioned in the beginning is known from WO 81/02272. In this input device the keys operable by the thumb have only a limited function. About this function the document WO 81/02272 states that whilst the thumb is strong, it is limited in its range of movements relative to the other fingers, however that it can conveniently operate control keys like CONTROL and CAPITALS simultaneously with the other fingers when necessary. Due to this limited function given to the thumb in this document the input device is either restricted or must overburden the other fingers. Further, WO 81/02272 shows the alignment of all keys parallel to each other.

Finally, from DE-A-26 38 271 there is known an input device having four-directional dip switches and bi-directional rocker switches.

The present invention provides an input device of the type mentioned in the beginning which according to the invention is characterized in that

(1) said first keys form a first key array;

(2) said second key array is disposed on an array axis which is aligned along a longitudinal axis of said first finger;

(3) said third key array is disposed on an array axis which is aligned along a longitudinal axis of said second finger; and

(4) said array axes of said second and third key arrays are configured relative to each other such that the axis of one array is angularly offset relative to the other array axis.

The electronic data entry or typewriter terminal according to the present invention is completely operational by a single human hand and includes character keys which can be separated into up to four different arrays, positioned and angled to align with the index, middle, ring, and small finger of an extended human hand. Each array contains at most eight keys. A further array is mounted to be accessible to the thumb of the same hand and contain those keys necessary to control the input and manipulation of data entered using the character keys. The control keys perform tasks such as entering commands, controlling a cursor, inserting or deleting text, and shifting from lower to upper case characters. A set of keys, referred to as data control keys, can be mounted to be accessible to several fingers of the hand operating the terminal, and can be used to input similar character or control commands. By requiring only one hand for operation, the apparatus provides the other hand with a degree of freedom not found in standard two-hand models. The system of inputting data using character and control keys is also faster to learn, because the keys are organized into five distinct arrays. The keyboard organization, by placing the keys in five arrays, provides a format that is not only easier to memorize, but also simpler to the user to comprehend.

These and other features of the invention will be better understood from the following detailed description, taken together with the drawing, wherein:

Figs. 1A-1D are full-face and cross-sectional views of four different embodiments for the terminal along with a range of dimensions for each;

Fig. 2 is a detailed view of the version of the terminal keyboard according to Fig. 1C;

Fig. 3A is a diagrammatic view of a four-directional momentary dip-switch;

Fig. 3B is a diagrammatic view of a five-directional momentary dip-switch;

Fig. 3C is a diagrammatic view of a four-directional momentary dip-switch with a sensor for a fifth command;

Fig. 3D is a pictorial presentation of a row of four bidirectional, momentary rocker switches;

Fig. 3E is a cross-sectional view of one of the four bidirectional, momentary rocker switches shown in Fig. 3D;

Figs. 4A-4F are pictorial views of a second embodiment of the keyboard with onto control key array and two sets of character key arrays, one for right-handed users and the other for left-handed users;

Fig. 5 is a pictorial view of a third embodiment with interchangeable control key and character key arrays to convert from right-to left-handed user orientation and vice versa;

Figs. 6A-6C are diagrammatic views of the value fields for each key of a right-hand oriented terminal; and

Figs. 7A-7B are diagrammatic views of the value fields for each key of a left-hand oriented terminal.

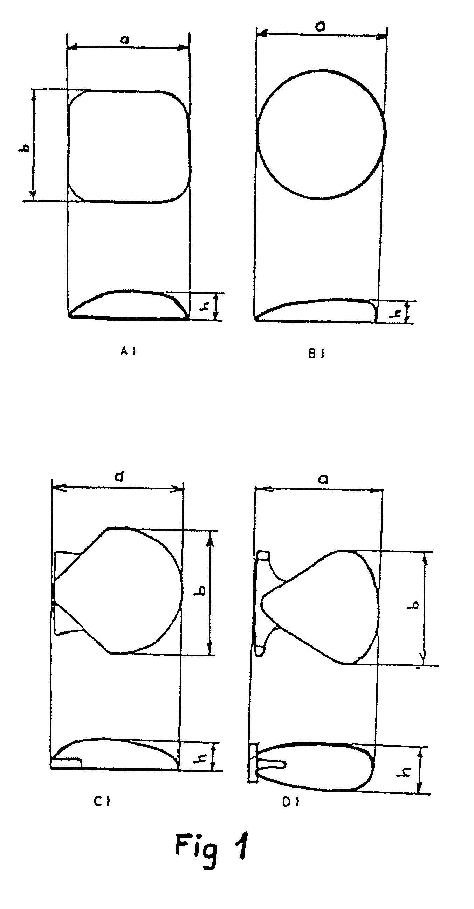

Referring to the drawings, there is shown a data input device or typewriter keyboard. When used as a data input terminal, the device would be linked to communicate with a computer or other similar electronic apparatus. The present invention could also be employed as a one-hand operated typewriter when connected to a mechanical printing unit. The keyboard may be either free-standing as a separate terminal or incorporated into a larger console. When free-standing, the planular side containing the input keys can be in a variety of shapes. These can include a square with rounded corners, a circle, a "shell" configuration, and a triangle with rounded corners with a base structure at one point of the triangle as shown in Figs. 1A, 1B, 1C, and 1D, respectively. The side "a" dimensions of each shape range from 14-24 cm, the side "b" dimensions from 12-22 cm, and the side "h" dimensions (the depth of the structure) from 0.1-8.0 cm.

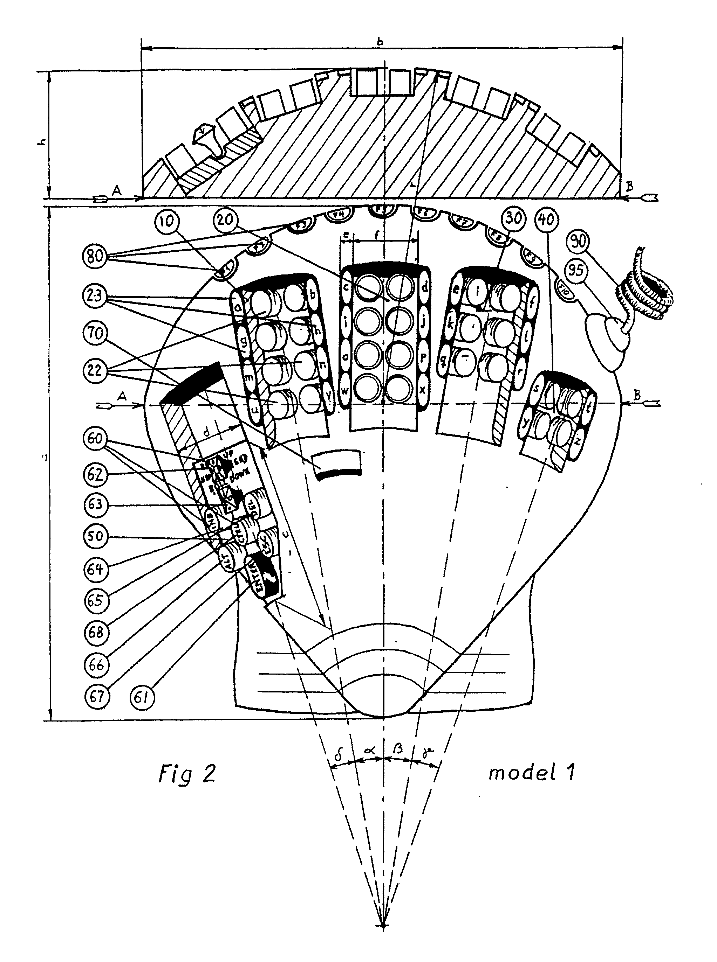

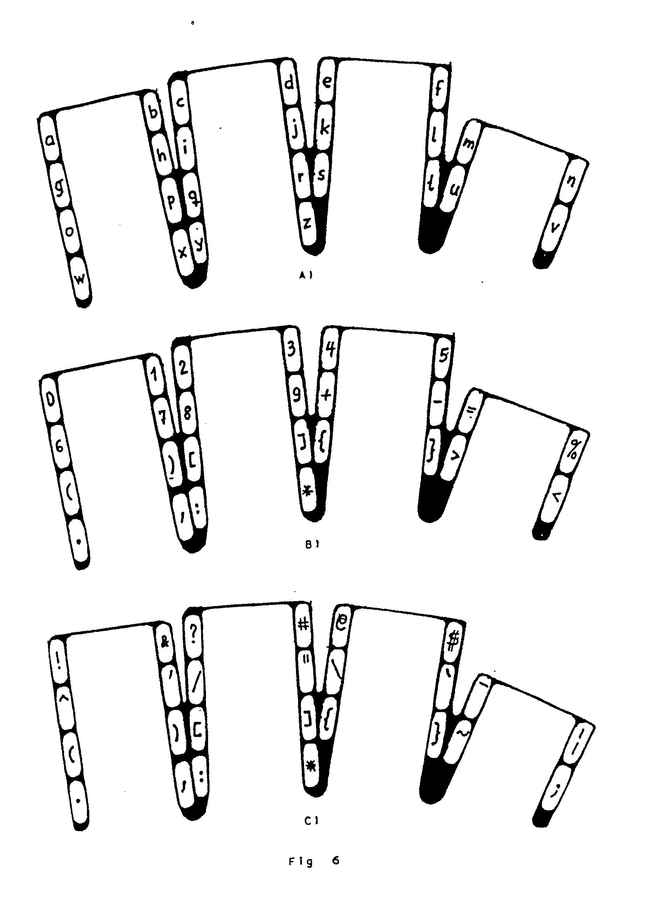

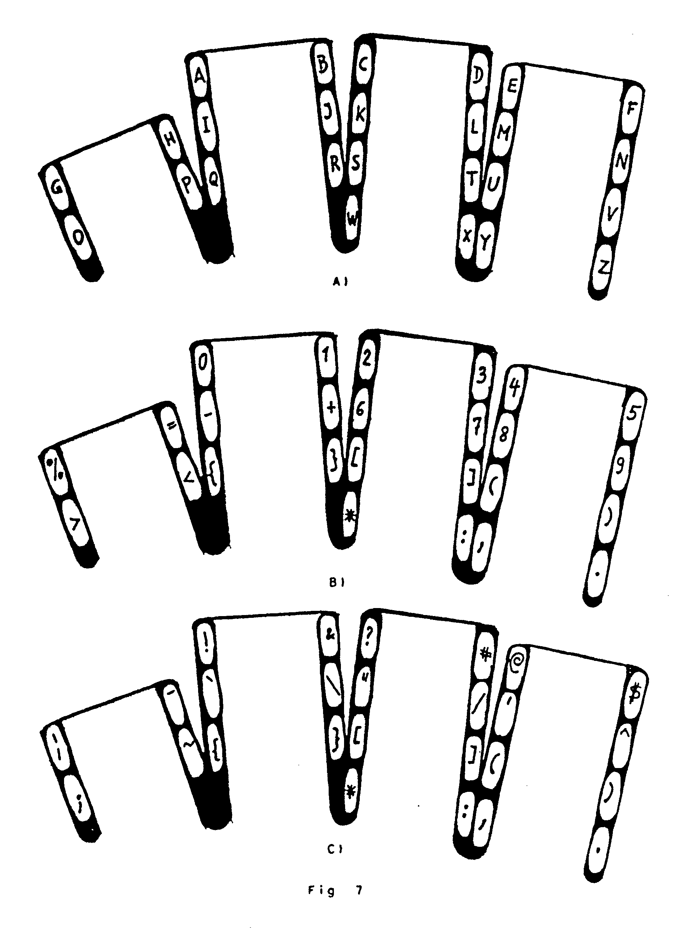

Fig. 2 shows the keyboard configuration of the invention for a right-handed user, although a complementary arrangement of arrays is possible for left-handed users. It consists of four arrays 10, 20, 30, and 40 of character keys, aligned and positioned to correspond to the location of the index, middle, ring, and small finger of an extended human hand. Each array is composed of a set of keys, which are used to input certain character values into the external electronic device to which the terminal is attached through cable 90 and connector 95. The character keys are preferably arranged in pairs along the axis of the finger to operate them. The values input by the keys include letters of the alphabet, numbers, as well as punctuation and other symbols (such as #, *, $, and %). Character input value labels 23 are positioned adjacent to the input key to which they pertain. The labels may consist of electronic display fields, which can be changed, along with the character value of the label's corresponding input key, by use of shift key 63. (See detailed description of Fig. 6A-6C and 7A-7C.) Although the keys are shown as one directional momentary pushbutton keys, similar to the type of keys found on conventional electronic typewriters, other types of input keys may be employed in the double-row format shown. A series of touchpads, whose operation is similar to that of a touch sensor, could be embedded into a flat panel. The panel, marked so as to identify the location of the touch pads, would then be incorporated into the terminal device at the locations corresponding to the key arrays shown in Fig. 2.

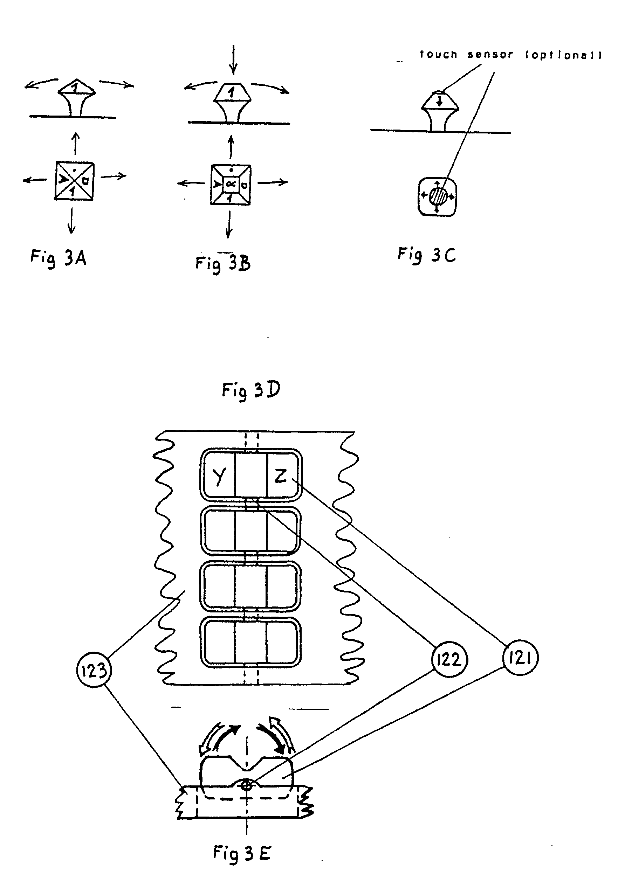

A bidirectional, momentary rocker switch is another form of input key which could be incorporated into the present invention. A series of rocker switches are shown in Fig. 3D. The rocker switch is able to produce two different input codes, as shown, for example, by the letters "Y" and "Z" in Fig. 3D. The key consists of a body 121 which is supported on an axle 122, the axle embedded into a base 123. A cross-sectional view of the bidirectional, momentary rocker switch is shown in Fig. 3E with the black and white arros showing the direction of movement. By pressing down the left side of the body in the direction of the left white arrow, the letter "Y" can be produced. At the same time, the right side of the body swings up into the direction of the rigth white arrow. Because of that upward movement of the right side of the body, the letter "Z" cannot be produced at the same time as the letter "Y". In order to produce the letter "Z", the operator would have to press the right side of the key, so that the left side swings up (black right and left arrows). When pressure is released, the body swings back into a neutral position. The advantage of a bidirectional, momentary rocker switch as an input key is that it is impossible to mistakenly press down both neighboring characters at the same time, thus reducing the possibility of creating undesirable misprints or typing errors in the document. A series of bidirectional momentary rocker switches could be utilized in lieu of the four key arrays 10, 20, 30, and 40 in Fig. 2 by incorporating one rocker switch for each pair of one-directional momentary pushbuttons. A space key 70 is positioned on the terminal, such that it can be activated by the palm of the hand while still operating the character and control key arrays. A fifth array 50 of control keys 60 is mounted to the structure to correspond to the location of the thumb of a human hand. The control key array is positioned in the same plane as the character key arrays of at any other angular location from which it is accessible by the thumb. In Fig. 2, it is in a plane vertical to the character key arrays. The control keys manipulate the information which has been entered using the character keys. This array includes those control commands found on standard computer terminals. The commands include an enter key 61 to input commands into the attached electronic device. A multidirectional momentary dip-switch, with or without a touch sensor, like in Fig. 3C, used as a cursor control key 62, can be used to maneuver the CRT cursor from point-to-point on the CRT screen. A shift key 63 changes the character key values from lower to upper case as well as to a different set of characters which could include numbers or punctuation. A multi-directional momentary dip-switch can be used for the shift key or, if preferred, a one-directional momentary pushbutton key. Additional information can be inserted into the middle of text already entered by placing the cursor at the desired location for the new entry and using the insert key 64. The character above which the cursor is located can be deleted from text already input by pressing the delete key 65. An alternate key 66, escape key 67, and control key 68, are also included in the control key array. The control key array 50 can slide up and down in its slot of width "d" and can be fixed in a certain position, in order to adjust the key shell for different sizes of operating hands.

Data control keys 80 are used to perform functions in the manipulation of entered text, and are mounted on the edge of the upper rim of the free-standing terminal in Fig. 2. However, their location is not necessarily fixed and thus they could be mounted to another location as long as they are in electronic communication with the terminal. The data control keys contain management input functions other than those embodied in the control key array. The control commands include margin left, margin right, and tab keys to facilitate paragraphing, line length, and the making of tables and charts. An optional repeat key is also incorporated to replicate the previously input character value. A given length of text could be eliminated from memory through the use of an erase key.

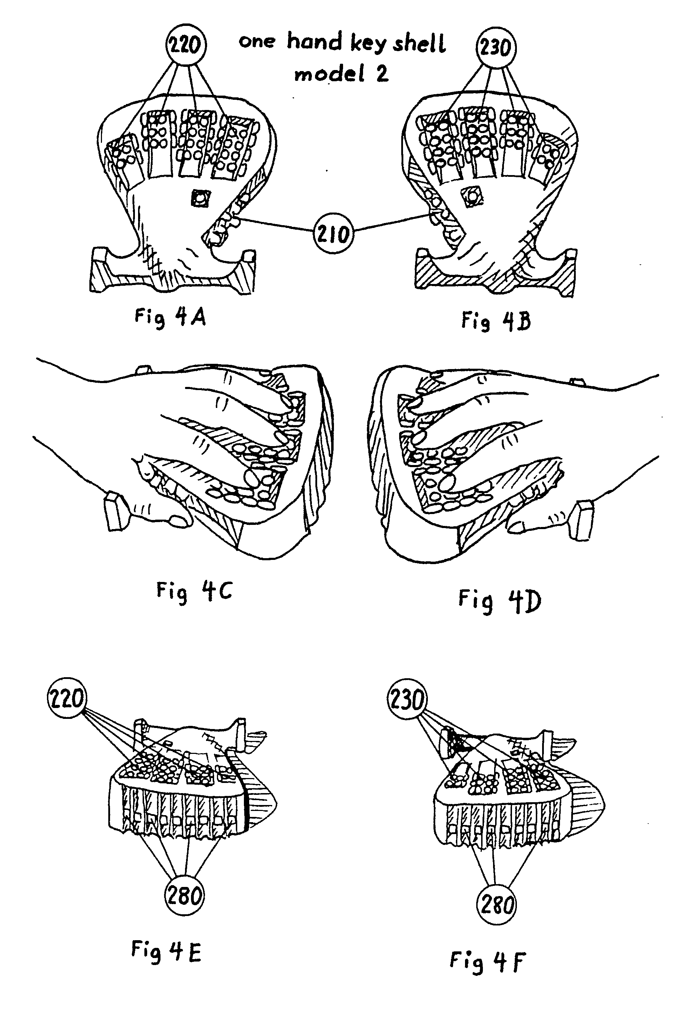

Top and bottom views of a second free-standing embodiment of the terminal are shown in Figs. 4A and 4B such that the control key array 210 is accessible to either a right-handed or left-handed user. Two sets of character key arrays are positioned such that they are mounted on oppositely facing sides of the terminal, one designed for left-handed users 220, and the other for right-handed users 230. Fig. 4C shows how the character keys 220 and the control keys 210 are operated by the operator's left hand. Fig. 4D shows how the character keys 230 and the control keys 210 are operated by an operator's right hand. Fig. 4E shows the front view of the key shell with the left-hand character keys 220 facing up, and data control keys 280 (analogous to keys 80 in Fig. 2) facing toward the front. The right-hand character keys 230 are invisible in Fig. 4E because they are facing down towards the surface of the desk on which the key shell is placed. Fig. 4F shows the front view of the key shell with the right-hand character keys facing up and the data control keys 280 facing towards the front. The left-hand character keys 220 in Fig. 4F are facing downwards toward the surface of the desk on which the key shell is placed.

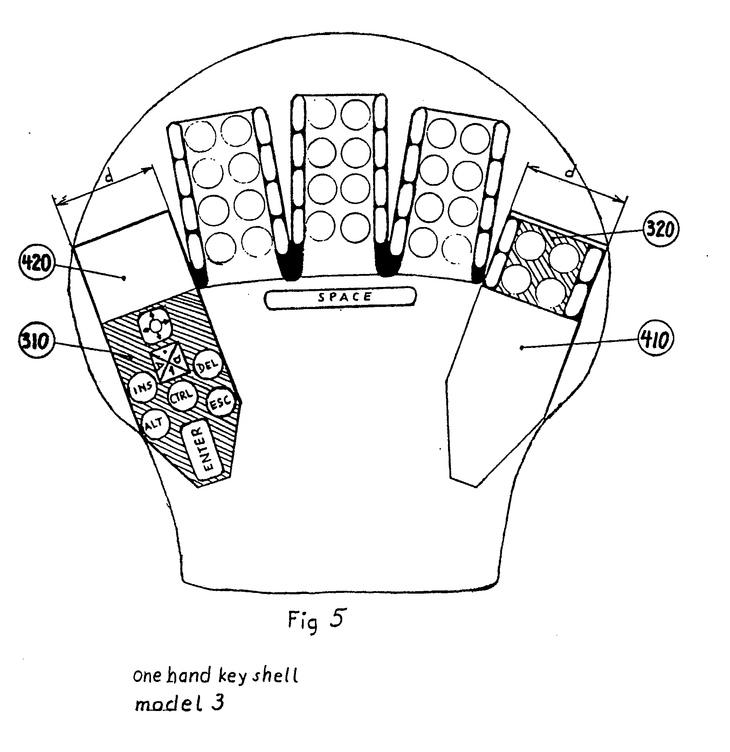

A third embodiment, shown in Fig. 5, can also be used by either a right-handed or left-handed user, because the keyboard contains slots for removable boards which are positioned to correspond to the small finger and thumb array locations of both hands. Removable keyboard arrays are used for the thumb and small finger. The slots for the changeable arrays are positioned on opposite sides of the keyboard, as shown in Fig. 5. Therefore control key array 310 can be moved to slot 410, and small-finger character key array 320 can be moved to slot 420 to convert the right-hand biased terminal in the figure to a left-hand biased terminal.

Figs. 6A-6C show the preferred positioning of letters of the alphabet, numbers, and various symbols for a terminal to be utilized by a right-handed user. Figs. 7A-7C show the same for a left-handed user terminal. Lower case letters from Fig. 6A may be displayed on key labels which are electronic display fields by the placing of a shift key in a first position. The characters in Figs. 6B, 7B and Figs. 6C, 7C are created on the same electronic labels by maneuvering the shift key into second and third positions, respectively. Upper case letters may be displayed by maneuvering the shift key into a fourth position. If the shift key is a one-directional momentary pushbutton key, then the described groups of characters could be available via a segmented cycle (upon pressing the shift key once, twice, etc.).

The present invention is not limited by the above solely exemplary detailed description. Modifications and substitutions by those skilled in the art are considered within the scope of the present claims. Therefore, the present invention is not to be considered limited except by the following claims.

## Claims

1. An input device operated by a single hand and used to transmit information between the operator of said device and an electronic apparatus in communication with said device, comprising:
a housing;
first keys (50) operable by the thumb of the hand and comprising a plurality of input means (61 to 68, 210) mounted to said housing;
a second key array (10) having a plurality of input means (22, 220, 230) mounted to said housing, said second array (10) is disposed on an array axis and operable by a first finger of the hand when the thumb of the hand is operably positioned proximal to said first keys (50); and
a third key array (20) having a plurality of input means mounted to said housing, said third array (20) is disposed on an array axis and operable by a second finger of the hand when the thumb and the first finger of the hand are operably positioned proximal to said first keys (50) and said second array (10), respectively, characterized in that
(1) said first keys form a first key array (50);
(2) said second key array (10) is disposed on an array axis which is aligned along a longitudinal axis of said first finger;
(3) said third key array (20) is disposed on an array axis which is aligned along a longitudinal axis of said second finger; and
(4) said array axes of said second and third key arrays (20, 30) are configured relative to each other such that the axis of one array is angularly offset relative to the other array axis.

2. An input device according to claim 1, characterized by further comprising:
a fourth key array (30) having a plurality of input means (22, 220, 230) mounted to said housing, said fourth array (30) disposed on an array axis which is aligned along a longitudinal axis of and operable by a third finger of the hand when the thumb, first finger and second finger of the hand are operably positioned proximal to said first, second and third arrays (50, 10, 20), respectively;
a fifth key array (40) having a plurality of input means (22, 220, 230) mounted to said housing, said fifth array (40) disposed on an array axis which is aligned along a longitudinal axis of and operable by a fourth finger of the hand when the thumb, first finger, second finger, and third finger of the hand are operably positioned proximal to said first, second, third and fourth arrays (50, 10, 20, 30), respectively; and
the array axes of the second, third, fourth and fifth arrays (10 to 40) configured relative to each other such that at least one of said array axis is angularly offset relative to one of the other three array axes.

3. The input device according to claim 1 or 2, characterized in that at least one of said arrays (10, 20, 30, 40, 50) of a plurality of input means (22, 61 to 68, 210, 220, 230) comprise control keys (61 to 68, 210).

4. The input device according to claim 3, characterized in that said at least one control key array (50) is said first key array (50).

5. The input device according to claim 1 or 2, characterized in that at least one of said input means (22, 61 to 68, 210, 220,230) is a one-directional momentary pushbutton key (22).

6. The input device according to claim 1 or 2, characterized in that at least one of said input means (22, 61 to 68, 210, 220, 230) is a four-directional momentary dip-switch (62).

7. The input device according to claim 1 or 2, characterized in that at least one of said input means (22, 61 to 68, 210, 220, 230) is a five-directional momentary dip-switch.

8. The input device according to claim 6 or 7, characterized in that said switch is located in said key array (50) of a plurality of input means (22, 61 to 68, 210, 220, 230) and mounted to be operably accessible to the thumb of the hand.

9. The input device according to claim 1 or 2, characterized in that at least one of said input means (22, 61 to 68, 210, 220,230) is a touchpad (22).

10. The input device according to claim 1 or 2, characterized in that at least one of said input means (22, 61 to 68, 210, 220, 230) is a bidirectional, momentary rocker switch (121 to 123).

11. The input device according to claim 1 or 2, characterized in that said input means (22, 220, 230) of said second and third key arrays (20, 30) are arranged in vertically aligned pairs along the axis of the finger of the hand designated for each.

12. The input device according to claim 2, characterized in that said input means (22, 220, 230) of said fourth and fifth key arrays (30, 40) are arranged in vertically aligned pairs along the axis of the finger of the hand designated for each.

13. The input device according to claim 2, characterized in that said first and said fifth key arrays (50, 40) are configured to be mutually interchangeable, said housing being arranged to receive said mutually interchangeable first and fifth key arrays (310, 320) in either configuration, permitting said input device to be operable alternately by the left and the right hand, and the input means (22, 220, 230) of said second, third, fourth and fifth key arrays (10 to 40) including single key stroke input keys (22) which permit the entry of a single character by the activation of one of said keys (22) providing a spacing between said key arrays (10 to 40) maximized at the positions corresponding to the maximum extension of corresponding finger.

14. The input device according to claim 1 or 2, characterized in that said device includes means (23) for labeling the input values of each of said input means (22, 61 to 68, 210, 220, 230).

15. The input device according to claim 14, characterized in that said labeling means (23) is operative to be changed to display the input values of each corresponding input means (22, 61 to 68, 210, 220, 230) by the use of a control key (63).

16. The input device according to claim 1 or 2, characterized in that at least one of said key arrays (10, 20, 30, 40, 50) of a plurality of input means comprise character keys.

17. The input device according to claim 1 or 2, characterized by further including at least one data entry key (80) mounted on said housing and operative to be activated by more than one finger of the hand.

18. The input device according to claim 17, characterized in that at least one of said data entry keys (80) comprises a control key.

19. The input device according to claim 1 or 2, characterized by further including at least one input means (70) mounted to said housing and operative for actuation by the palm of said hand while any two fingers of said hand are in physical contact with their respective key arrays.

20. The input device according to claim 1 or 2, characterized in that said input means (22, 220, 230) of said second and third arrays (20, 30) including single key stroke input keys (22) which permit the entry of a single character by the activation of one of said keys (22).

21. The input device according to claim 2, characterized in that said input means (22, 220, 230) of said fourth and fifth arrays (30, 40) including single key stroke input keys (22) which permit the entry of a single character by the activation of one of said keys (22).

**Revendications**

1. Dispositif d'entrée actionné par une unique main et utilisé pour transmettre une information entre l'opérateur dudit dispositif et un appareil électronique en communication avec ledit dispositif, comprenant :

   un boîtier ;

   des premières touches (50) qui peuvent être actionnées par le pouce de la main et qui comprennent une pluralité de moyens d'entrée (61 à 68, 210) qui sont montés sur ledit boîtier ;

   un second rang de touches (10) qui comporte une pluralité de moyens d'entrée (22, 220, 230) montés sur ledit boîtier, ledit second rang (10) étant disposé sur un axe de rang et pouvant être actionné par un premier doigt de la main lorsque le pouce de la main est positionné à proximité desdites premières touches (50) de manière à être prêt à les actionner ; et

   un troisième rang de touches (20) qui comporte une pluralité de moyens d'entrée montés sur ledit boîtier, ledit troisième rang (20) étant disposé sur un axe de rang et pouvant être actionné par un second doigt de la main lorsque le pouce et le premier doigt de la main sont respectivement positionnés à proximité desdites premières touches (50) et dudit second rang (10) de manière à être prêts à les actionner ;

   caractérisé en ce que :

   (1) lesdites premières touches forment un premier rang de touches (50) ;

   (2) ledit second rang de touches (10) est disposé sur un axe de rang qui est aligné le long d'un axe longitudinal dudit premier doigt ;

   (3) ledit troisième rang de touches (20) est disposé sur un axe de rang qui est aligné le long d'un axe longitudinal dudit second doigt ; et

   (4) lesdits axes de rang desdits second et troisième rangs de touches (20, 30) sont configurés l'un par rapport à l'autre de telle sorte que l'axe d'un rang est décalé d'un certain angle par rapport à l'autre axe de rang.

2. Dispositif d'entrée selon la revendication 1, caractérisé en ce qu'il comprend en outre :

   un quatrième rang de touches (30) qui comporte une pluralité de moyens d'entrée (22, 220, 230) montés sur ledit boîtier, ledit quatrième rang (30) étant disposé sur un axe de rang qui est aligné le long d'un axe longitudinal d'un troisième doigt de la main et pouvant être actionné par ce troisième doigt lorsque le pouce, le premier doigt et le second doigt de la main sont positionnés respectivement à proximité desdits premier, second et troisième rangs (50, 10, 20) de manière à être prêts à les actionner ;

   un cinquième rang de touches (40) qui comporte une pluralité de moyens d'entrée (22, 220, 230) montés sur ledit boîtier, ledit cinquième rang (40) étant disposé sur un axe de rang qui est aligné le long d'un axe longitudinal d'un quatrième doigt de la main et pouvant être actionné par ce quatrième doigt lorsque le pouce, le premier doigt, le second doigt et le troisième doigt de la main sont respectivement positionnés à proximité desdits premier, second, troisième et quatrième rangs (50, 10, 20, 30) de manière à être prêts à les actionner ; et

   les axes de rang des second, troisième, quatrième et Cinquième rangs (10 à 40) sont configurés les uns par rapport aux autres de telle sorte qu'au moins un desdits axes de rang est décalé d'un certain angle par rapport à un des trois autres axes de rang.

3. Dispositif d'entrée selon la revendication 1 ou 2, caractérisé en ce qu'au moins un desdits rangs (10, 20, 30, 40, 50) d'une pluralité de moyens d'entrée (22, 61 à 68, 210, 220, 230) comprend des touches de commande (61 à 68, 210).

4. Dispositif d'entrée selon la revendication 3, caractérisé en ce que ledit au moins un rang de touches de commande (50) est ledit premier rang de touches (50).

5. Dispositif d'entrée selon la revendication 1 ou 2, caractérisé en ce qu'au moins un desdits moyens d'entrée (22, 61 à 68, 210, 220, 230) est une touche à bouton poussoir sans maintien monodirectionnelle (22).

6. Dispositif d'entrée selon la revendication 1 ou 2, caractérisé en ce qu'au moins un desdits moyens d'entrée (22, 61 à 68, 210, 220, 230) est un commutateur à positions multiples sans maintien à quatre directions (62).

7. Dispositif d'entrée selon la revendication 1 ou 2, caractérisé en ce qu'au moins un desdits moyens d'entrée (22, 61 à 68, 210, 220, 230) est un commutateur à positions multiples sans maintien à cinq directions.

8. Dispositif d'entrée selon la revendication 6 ou 7, caractérisé en ce que ledit commutateur est localisé dans ledit rang de touches (50) d'une pluralité de moyens d'entrée (22, 61 à 68, 210, 220, 230) et est monté de manière à être accessible pour le pouce de la main afin d'être actionné.

9. Dispositif d'entrée selon la revendication 1 ou 2, caractérisé en ce qu'au moins un desdits moyens d'entrée (22, 61 à 68, 210, 220, 230) est un pavé tactile (22).

10. Dispositif d'entrée selon la revendication 1 ou 2, caractérisé en ce qu'au moins un desdits moyens d'entrée (22, 61 à 68, 210, 220, 230) est un commutateur à bascule sans maintien bidirectionnel (121 à 123).

11. Dispositif d'entrée selon la revendication 1 ou 2, caractérisé en ce que lesdits moyens d'entrée (22, 220, 230) desdits second et troisième rangs de touches (20, 30) sont agencés selon des paires alignées verticalement le long de l'axe du doigt de la main assigné à chacun.

12. Dispositif d'entrée selon la revendication 2, caractérisé en ce que lesdit moyen d'entrée (22, 220, 230) desdits quatrième et cinquième rangs de touches (30, 40) sont agencés selon des paires alignées verticalement le long de l'axe du doigt de la main qui est assigné à chacun.

13. Dispositif d'entrée selon la revendication 2, caractérisé en ce que :

lesdits premier et cinquième rangs de touches (50, 40) sont configurés de manière à être mutuellement interchangeables, ledit boîtier étant agencé pour recevoir lesdits premier et cinquième rangs de touches mutuellement interchangeables (310, 320) selon l'une ou l'autre configuration, permettant audit dispositif d'entrée d'être actionné alternativement par la main gauche et par la main droite ; et

les moyens d'entrée (22, 220, 230) desdits second, troisième, quatrième et cinquième rangs de touches (10 à 40) comprenant des touches d'entrée à frappe de touche unique (22) qui permettent l'entrée d'un unique caractère par l'activation d'une desdites touches (22) en fournissant d'un espace entre lesdits rangs de touches (10 à 40) qui est maximisé au niveau des positions qui correspondent à l'extension maximale d'un doigt correspondant.

14. Dispositif d'entrée selon la revendication 1 ou 2, caractérisé en ce que ledit dispositif inclut un moyen (23) qui permet d'étiqueter les valeurs d'entrée de chacun desdits moyens d'entrée (22, 61 à 68, 210, 220, 230).

15. Dispositif d'entrée selon la revendication 14, caractérisé en ce que ledit moyen d'étiquetage (23) peut être changé pour afficher les valeurs d'entrée de chaque moyen d'entrée correspondant (22, 61 à 68, 210, 220, 230) au moyen de l'utilisation d'une touche de commande (63).

16. Dispositif d'entrée selon la revendication 1 ou 2, caractérisé en ce qu'au moins un desdits rangs de touches (10, 20, 30, 40, 50) d'une pluralité de moyens d'entrée comprend des touches de caractère.

17. Dispositif d'entrée selon la revendication 1 ou 2, caractérisé en ce qu'il inclut en outre au moins une touche d'entrée de données (80) qui est montée sur ledit boîtier et qui peut être activée par plus d'un doigt de la main.

18. Dispositif d'entrée selon la revendication 17, caractérisé en ce qu'au moins une desdites touches d'entrée de données (80) comprend une touche de commande.

19. Dispositif d'entrée selon la revendication 1 ou 2, caractérisé en ce qu'il inclut en outre au moins un moyen d'entrée (70) qui est monté sur ledit boîtier et qui peut être actionné par la paume de ladite main tandis que n'importe quels deux doigts de ladite main sont en contact physique avec leurs rangs de touches respectifs.

20. Dispositif d'entrée selon la revendication 1 ou 2, caractérisé en ce que lesdits moyens d'entrée (22, 220, 230) desdits second et troisième rangs (20, 30) incluent des touches d'entrée à frappe de touche unique (22) qui permettent l'entrée d'un unique caractère du fait de l'activation d'une desdites touches (22).

21. Dispositif d'entrée selon la revendication 2, caractérisé en ce que lesdits moyens d'entrée (22, 220, 230) desdits quatrième et cinquième rangs (30, 40) incluent des touches d'entrée à frappe de touche unique (22) qui permettent l'entrée d'un unique caractère au moyen de l'activation d'une desdites touches (22).

## Patentansprüche

1. Eingabeeinrichtung, die mittels einer einzigen Hand betätigt und dazu benutzt wird, Information zwischen der Bedienungsperson dieser Einrichtung und einer in Verbindung mit dieser Einrichtung befindlichen elektronischen Einrichtung zu übertragen, umfassend:

   ein Gehäuse;

   erste Tasten (50), die mittels des Daumens der Hand betätigbar sind und eine Mehrzahl von Eingabemitteln (61 bis 68, 210) umfassen, die an dem Gehäuse angebracht sind;

   eine zweite Tastengruppierung (10), die eine Mehrzahl von Eingabemitteln (22, 220, 230) hat, welche an dem Gehäuse angebracht sind, wobei die zweite Gruppierung (10) auf einer Gruppierungsachse angeordnet und mittels eines ersten Fingers der Hand betätigbar ist, wenn der Daumen der Hand betriebsbereit in der Nähe der ersten Tasten (50) positioniert ist; und

   eine dritte Tastengruppierung (20), die eine Mehrzahl von Eingabemitteln hat, welche an dem Gehäuse angebracht sind, wobei die dritte Gruppierung (20) auf einer Gruppierungsachse angeordnet und mittels eines zweiten Fingers der Hand betätigbar ist, wenn der Daumen und der erste Finger der Hand betriebsbereit in der Nähe der ersten Tasten (50) bzw. der zweiten Gruppierung (10) positioniert sind,

   dadurch **gekennzeichnet,** daß
   (1) die ersten Tasten eine erste Tastengruppierung (50) bilden;
   (2) die zweite Tastengruppierung (10) auf einer Gruppierungsachse angeordnet ist, welche längs einer Längsachse des ersten Fingers ausgerichtet ist;
   (3) die dritte Tastengruppierung (20) auf einer Gruppierungsachse angeordnet ist, welche längs einer Längsachse des zweiten Fingers ausgerichtet ist; und
   (4) die Gruppierungsachsen der zweiten und dritten Tastengruppierung (20, 30) relativ zueinander derart konfiguriert sind, daß die Achse von einer Gruppierung winklig relativ zu der anderen Gruppierungsachse versetzt ist.

2. Eingabeeinrichtung nach Anspruch 1, dadurch **gekennzeichnet,** daß sie weiter folgendes umfaßt:

   eine vierte Tastengruppierung (30), die eine Mehrzahl von Eingabemitteln (22, 220, 230) hat, welche an dem Gehäuse angebracht sind, wobei die vierte Gruppierung (30) auf einer Gruppierungsachse angeordnet ist, welche längs einer Längsachse eines dritten Fingers der Hand ausgerichtet und mittels dieses dritten Fingers betätigbar ist, wenn der Daumen, der erste Finger und der zweite Finger der Hand betriebsbereit in der Nähe der ersten bzw. zweiten bzw. dritten Gruppierung (50, 10, 20) positioniert sind;

   eine fünfte Tastengruppierung (40), die eine Mehrzahl von Eingabemitteln (22, 220, 230) hat, welche an dem Gehäuse angebracht sind, wobei die fünfte Gruppierung (40) auf einer Gruppierungsachse angeordnet ist, welche längs einer Längsachse eines vierten Fingers der Hand ausgerichtet und mittels dieses vierten Fingers betätigbar ist, wenn der Daumen, der erste Finger, der zweite Finger und der dritte Finger der Hand betriebsbereit in der Nähe der ersten bzw. zweiten bzw. dritten bzw. vierten Gruppierung (50, 10, 20, 30) positioniert sind; und

   die Gruppierungsachsen der zweiten, dritten, vierten und fünften Gruppierung (10 bis 40) relativ zueinander derart konfiguriert sind, daß wenigstens eine der Gruppierungsachsen relativ zu einer der anderen drei Gruppierungsachsen winklig versetzt ist.

3. Eingabeeinrichtung nach Anspruch 1 oder 2, dadurch **gekennzeichnet,** daß wenigstens eine der Gruppierungen (10, 20, 30, 40, 50) von einer Mehrzahl von Eingabemitteln (22, 61 bis 68, 210, 220, 230) Steuertasten (61 bis 68, 210) umfaßt.

4. Eingabeeinrichtung nach Anspruch 3, dadurch **gekennzeichnet,** daß die wenigstens eine Steuertastengruppierung (50) die erste Tastengruppierung (50) ist.

5. Eingabeeinrichtung nach Anspruch 1 oder 2, dadurch **gekennzeichnet,** daß wenigstens eines der Eingabemittel (22, 61 bis 68, 210, 220, 230) eine Ein-Richtungs-Momentan-Druckknopftaste (22) ist.

6. Eingabeeinrichtung nach Anspruch 1 oder 2, dadurch **gekennzeichnet,** daß wenigstens eines der Eingabemittel (22, 61 bis 68, 210, 220, 230) ein Vier-Richtungs-Momentan-Neigungsschalter (62) ist.

7. Eingabeeinrichtung nach Anspruch 1 oder 2, dadurch **gekennzeichnet**, daß wenigstens eines der Eingabemittel (22, 61 bis 68, 210, 220, 230) ein Fünf-Richtungs-Momentan-Neigungsschalter ist.

8. Eingabeeinrichtung nach Anspruch 6 oder 7, dadurch **gekennzeichnet**, daß sich der Schalter in der Tastengruppierung (50) von einer Mehrzahl von Eingabemitteln (22, 61 bis 68, 210, 220, 230) befindet und so angebracht ist, daß er betriebsmäßig für den Daumen der Hand zugänglich ist.

9. Eingabeeinrichtung nach Anspruch 1 oder 2, dadurch **gekennzeichnet**, daß wenigstens eines der Eingabemittel (22, 61 bis 68, 210, 220, 230) ein Berührungskissen (22) ist.

10. Eingabeeinrichtung nach Anspruch 1 oder 2, dadurch **gekennzeichnet**, daß wenigstens eines der Eingabemittel (22, 61 bis 68, 210, 220, 230) ein Zwei-Richtungs-Momentan-Wippschalter (121 bis 123) ist.

11. Eingabeeinrichtung nach Anspruch 1 oder 2, dadurch **gekennzeichnet**, daß die Eingabemittel (22, 220, 230) der zweiten und dritten Tastengruppierung (20, 30) in vertikal ausgerichteten Paaren längs der Achse des für jeden bestimmten Fingers der Hand angeordnet sind.

12. Eingabeeinrichtung nach Anspruch 2, dadurch **gekennzeichnet**, daß die Eingabemittel (22, 220, 230) der vierten und fünften Tastengruppierung (30, 40) in vertikal fluchtenden Paaren längs der Achse des für jede bestimmten Fingers der Hand angeordnet sind.

13. Eingabeeinrichtung nach Anspruch 2, dadurch **gekennzeichnet**, daß

die erste und fünfte Tastengruppierung (50, 40) so konfiguriert sind, daß sie gegenseitig austauschbar sind, wobei das Gehäuse so eingerichtet ist, daß es die gegenseitig austauschbare erste und fünfte Tastengruppierung (310, 320) in jeder Konfiguration aufnimmt, wobei es diese Eingabeeinrichtung gestattet, wechselweise mittels der linken und der rechten Hand betätigbar zu sein, und

die Eingabemittel (22, 220, 230) der zweiten, dritten, vierten und fünften Tastengruppierung (10 bis 40) Einzel-Tastenhub-Eingabetasten (22) sind, welche die Eingabe eines einzelnen Buchstabens durch die Aktivierung von einer der Tasten (22) gestatten, wobei ein Abstand zwischen den Tastengruppierungen (10 bis 40) vorgesehen ist, der an den Positionen maximiert ist, welche der maximalen Erstreckung des entsprechenden Fingers entsprechen.

14. Eingabeeinrichtung nach Anspruch 1 oder 2, dadurch **gekennzeichnet**, daß die Einrichtung Mittel (23) zum Bezeichnen der Eingabewerte von jedem der Eingabemittel (22, 61 bis 68, 210, 220, 230) aufweist.

15. Eingabeeinrichtung nach Anspruch 14, dadurch **gekennzeichnet**, daß das Bezeichnungsmittel (23) dahingehend operativ ist, daß es geändert werden kann, um die Eingabewerte von jedem entsprechenden Eingabemittel (22, 61 bis 68, 210, 220, 230) mittels der Verwendung einer Steuertaste (63) in Sichtwiedergabe wiederzugeben.

16. Eingabeeinrichtung nach Anspruch 1 oder 2, dadurch **gekennzeichnet**, daß wenigstens eine der Tastengruppierungen (10, 20, 30, 40, 50) einer Mehrzahl von Eingabemitteln Schriftzeichentasten umfaßt.

17. Eingabeeinrichtung nach Anspruch 1 oder 2, dadurch **gekennzeichnet**, daß sie weiter wenigstens eine Dateneingabetaste (80) aufweist, die auf dem Gehäuse angebracht und dahingehend operativ ist, daß sie mittels mehr als einem Finger der Hand aktiviert werden kann.

18. Eingabeeinrichtung nach Anspruch 17, dadurch **gekennzeichnet**, daß wenigstens eine der Dateneingabetasten (80) eine Steuertaste umfaßt.

19. Eingabeeinrichtung nach Anspruch 1 oder 2, dadurch **gekennzeichnet**, daß sie weiter wenigstens ein Eingabemittel (70) aufweist, das an dem Gehäuse angebracht und dahingehend operativ ist, daß es durch den Handteller der Hand betätigbar ist, während irgendwelche zwei Finger dieser Hand in physischem Kontakt mit ihren jeweiligen Tastengruppierungen sind.

20. Eingabeeinrichtung nach Anspruch 1 oder 2, dadurch **gekennzeichnet**, daß die Eingabemittel (22, 220, 230) der zweiten und dritten Gruppierung (20, 30) Einzel-Tastenhub-Eingabetasten (22) aufweisen, welche die Eingabe eines einzelnen Schriftzeichens durch die Aktivierung von einer der Tasten (22) gestatten.

21. Eingabeeinrichtung nach Anspruch 2, dadurch **gekennzeichnet**, daß die Eingabemittel (22, 220, 230) der vierten und fünften Gruppierung (20, 30) Einzel-Tastenhub-Eingabetasten (22) aufweisen, welche die Eingabe eines einzelnen Schriftzeichens durch die Aktivierung von einer der Tasten (22) gestatten.

Fig 1

Fig 2                    model 1

Fig 3A

Fig 3B

touch sensor (optional)

Fig 3C

Fig 3D

Y    Z

123

122

121

Fig 3E

one hand key shell model 2

Fig 4A

Fig 4B

Fig 4C

Fig 4D

Fig 4E

Fig 4F

Fig 5

one hand key shell
model 3

Fig 6

Fig 7